# EUROPEAN PATENT APPLICATION

(11) **EP 1 727 257 A1**
(43) Date of publication of application: **29.11.2006**
(21) Application number: 05460012.7
(22) Date of filing: 25.05.2005
(51) Int. Cl.: H02H 7/05, H02H 9/00

(54) **A protection circuit for potential transformers**

(71) Applicant: ABB Sp.zo.o., 04-713 Warszawa (PL)
(72) Inventor: Piasecki, Wojciech, 30-611 Krakow (PL); Florkowski, Marek, 31-216 Krakow (PL); Luto, Mariusz, 06-300 Przasnysz (PL); Mahonen, Pentti, 65320 Vaasa (FI)
(74) Representative: Chochorowska-Winiarska, Krystyna

(57) **Abstract**

The subject of the invention is a protection circuit for potential transformers, finding application in the attenuation of ferroresonant oscillations occurring in potential transformers in a high voltage network.

The system according to the invention features is characterized that the damping resistor (2) and the thermal protection element (3) having a form of a PTC thermistor are connected into the circuit of the open-delta arranged auxiliary windings of the three single phase potential transformers by means of a an electronic switching element or a circuitry (4) of a threshold switching characteristic so that exceeding the threshold voltage at the terminals of the open-delta arranged auxiliary windings of the three single phase potential transformers turns the switching element or the circuitry (4) into its conductive state.

## Description

The subject of the invention is a protection circuit for potential transformers, finding application in the attenuation of ferroresonant oscillations occurring in potential transformers in a high voltage network.

For the attenuation of ferroresonant osccilations in electrical equipment, and especially in potential transformers which are working in three phase network, an attenuating resistor of a resistance of several dozens of ohms is typically used. Such a resistor is connected to three auxiliary secondary windings of three single-phase transformers forming an open delta circuit. Though this solution employs a simple design, it has significant disadvantages. In case of sustained unbalance in the supply network, the small resistance value of the attenuating resistor, which is required for the effectiveness of ferroresonant oscillation attenuation, brings about the danger of thermal damage to the potential transformers or the resistor itself. In practice, attenuating resistors of power of several hundred watts and of large dimensions are used.

There in known from German patent description DE 1 265 836, a circuit for damping relaxation oscillations in a single-pole, grounded inductive potential transformer in a three phase network. In this circuit an attenuating resistor is connected to the open-delta arranged auxiliary windings of the three single-phase transformer by the working contacts of the three relays. The working contacts are activated by secondary windings of the transformers. The use of such relays makes it possible to disconnect the attenuating resistor in the case of the network unbalance which is caused by en earth-fault.

The disadvantage of this solution is a need for using electromechanical elements as relays and the necessity to control them by additional secondary windings of the transformers.

From the British patent specification GB 1 150 865 there is known a controlled anti-ferroresonance circuit for a capacitive voltage transformer. This circuit comprises a damping burden, a gate-controlled semi-conductor switch and triggering means. The semi-conductor switch provides the connection of the damping burden to the intermediate transformer. The triggering means provide the working state of the gate-controlled semi-conductor switch during the presence of unwanted oscillations.

Similarly, from the German patent application DE 2 704 112 there is known the protection system which protects the secondary winding of an intermediate inductive transformer. This system comprises a damping burden which is connected with a PTC resistor which is connecting with a switch. The switch is controlled by a timing member which switches the dumping burden on for the heating time of the PTC resistor.

From the patent application WO 2005/008859 there is known a medium-voltage potential transformer protection system which comprises an attenuating resistor connected into the open delta system of three auxiliary secondary windings of three single-phase transformers. Between the attenuating resistor and the output of the auxiliary secondary winding of one of the single-phase transformers there is an element having a threshold voltage and current characteristic and a thermal fuse which are connected in series. Preferably the thermal fuse has the form of a PTC resistor and the element with threshold voltage and current characteristic has the form of two Zener diodes push-pull connected with one another or a varistor.

The disadvantage of the presented system is that in the case of using the element having a threshold voltage and current characteristic, significant thermal power is dissipated when the voltage threshold is exceeded. This is the result of a large value of the product of the threshold voltage and of the current. That is the reason that the elements having a threshold voltage and current characteristic i.e. Zener diode or varistors have to be dimensioned so that they withstand significant thermal loading. Therefore there is a need for finding a different element or circuit facilitating current flow through the damping resistor and through the PTC thermistor connected to the open-delta arranged auxiliary windings of the three single-phase potential transformers in the case of appearance of the ferroresonant oscillations in at least one of the three transformer in the three phase network.

The essence of the protection circuit for potential transformers, connected into a circuit of open-delta arranged auxiliary windings of three single phase potential transformers, comprising a damping resistor and a thermal protection element, is that the damping resistor and the thermal protection element having a form of a PTC thermistor are connected into the circuit of the open-delta arranged auxiliary windings of the three single phase potential transformers by means of a switching element or a circuitry of a threshold switching characteristic so that exceeding the threshold voltage at the terminals of the open-delta arranged auxiliary windings of the three single phase potential transformers turns the electronic switching element or the circuitry into its conductive state.

Preferably the electronic switching element has a form of a diac.

Preferably the switching circuitry comprises a triac having a gate controlled by means of a diac.

The advantage of the inventive system is significant decreasing of the thermal power dissipated in the element facilitating current flow through the damping resistor and through the PTC thermistor connected to the open-delta arranged auxiliary windings of the three single-phase potential transformers in the case of appearance of the ferroresonant oscillations in at least one of the three transformer in the three phase network.

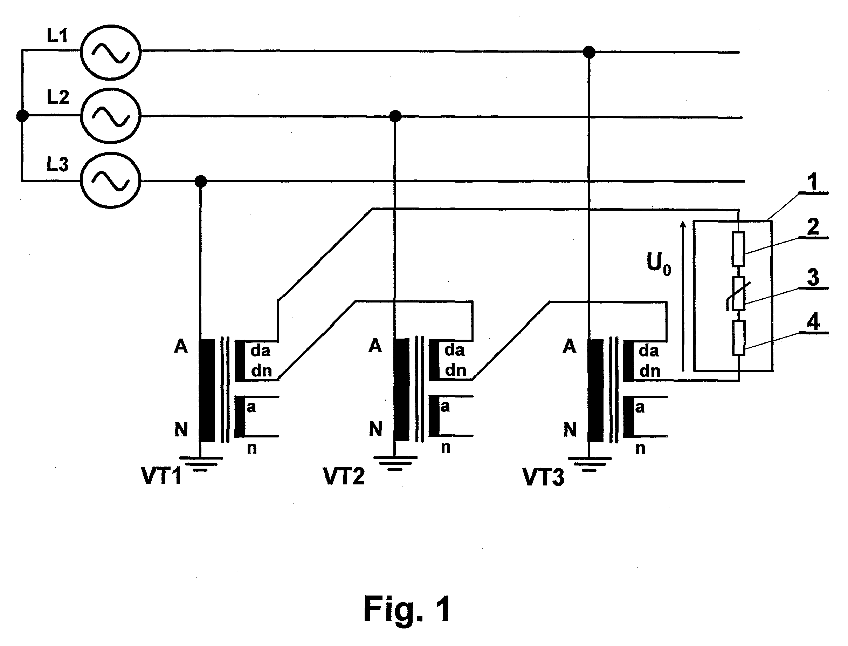

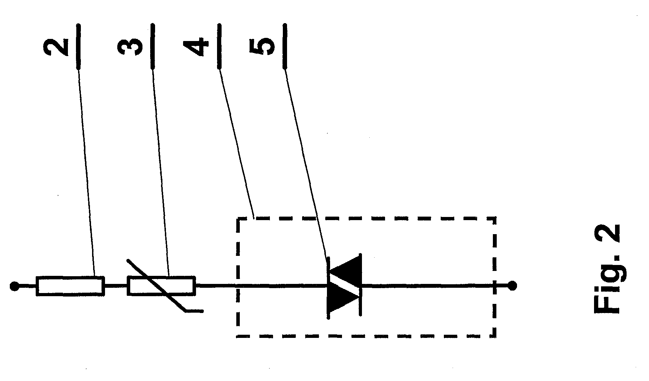

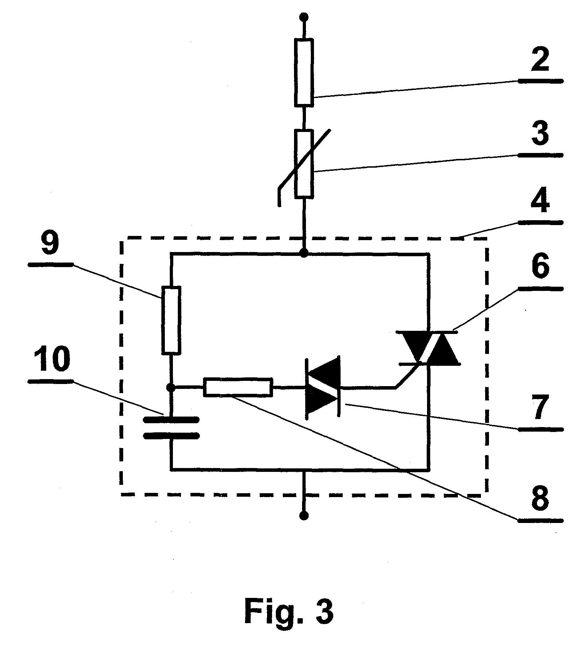

The subject of the invention is presented in an embodiment in the drawing where fig.1 shows a protection circuit for potential transformers in a schematic way, fig.2 - the first variant of the protecting circuit with an electronic switching element, and fig.3 - the second variant of the protecting circuit with an electronic switching circuitry.

The auxiliary windings of three single-phase potential transformers VT1, VT2, VT3 are connected with one another to form an open delta arrangement. Primary windings A-N are directly connected with a three-phase network RST and earth. The terminals of the secondary windings an of the individual transformers are the working outputs of these transformers. The terminals of the auxiliary secondary windings da and dn of the transformers are connected with one another in such way that the terminal da of the auxiliary secondary winding of the transformer VT1 is connected with the input of the protection system 1, whose output is connected with the terminal dn of the auxiliary secondary winding of the third transformer VT3, and whose terminal da is connected with the terminal dn of the auxiliary secondary winding of the second transformer VT2. Next, the terminal da of the second transformer VT2 is connected with the terminal dn of the first transformer VT1. During the device operation, between the terminal da of the first transformer VT1 and the terminal dn of the third transformer VT3 voltage U₀ appears, which is applied to the terminals of the protection system 1.

The protecting system 1 comprises interconnected in series: a damping resistor 2, a thermal protection element 3 having a form of a PTC thermistor and an electronic switching element or circuitry 4 of a threshold switching characteristic so that exceeding the threshold voltage at the terminals of the open-delta arranged auxiliary windings of the three single phase potential transformers VT1, VT2 and/or VT3 turns the switching element or the circuitry 4 into its conductive state. In the first embodiment of the invention the switching element has a form of a diac 5. In the second embodiment of the invention with the application of the switching circuitry a triac 6 is used, whose gate is controlled by means of a diac 7 connected with a resistors 8, 9 and with a capacitor 10. There are other possible embodiments of the invention in which the triac is controlled by the other electronic means, not shown in the drawing, that are chosen so that the triac is activated after the predefined threshold voltage is exceeded.

The operation of the inventive circuit s as follows:
In case of full balance in a three-phase network, the zero-sequence voltage U₀ has a value = 0 and no current flows through the protection system 1.

In case of a small unbalance in the three-phase network, voltage U₀ has a non-zero value, but smaller than the value of the threshold voltage of the switching element or the circuitry 4. In such case there is also no current flow through the protection circuit 1.

In the event that a ferroresonant oscillations occur in the three-phase network, voltage U₀ has a value exceeding the threshold value of the switching element or circuitry 4. In that case in each cycle of the U₀ voltage oscillation the switching on of the switching element or the circuitry 4 takes place two times: for the positive and for the negative half of the U₀ waveform respectively. The switching element or circuitry 4 conducts current through the damping resistor 2 and through the PTC thermistor 3. Due to small value of the resistance of the resistor 2 and of the PTC thermistor 3 at the occurrence of the ferroresonant oscillations, their immediate attenuating takes place. The sum of the resistance of the damping resistor 2 and of the PTC thermistor 3 as well as the thermal capacity of the PTC thermistor 3 are selected in such way that complete ferroresonant oscillations damping is achieved before the temperature of the PTC thermistor 3 reach the level at which the equivalent resistance of the protection circuit 1 is too high for ferroresonant oscillations damping. Application of the switching element or the circuitry 4 of a threshold switching characteristics minimises the heat dissipation in this element or circuitry while it is conducting current.

In the event that a considerable sustained unbalance in a three-phase network occurs, which may be caused, for instance, by an earth fault of one of the phase conductors, voltage U₀ has also a value exceeding the threshold value of the switching element or circuitry 4. Current of high intensity flows through the protection circuit 1.
However, since such condition does not require the action of the damping 2 resistor, the PTC thermistor 3 is activated resulting in a large increase in the eqiuvalent resistance of the protection circuit 1. In this case the current flowing through the protection circuit 1 is substantially reduced. Similarly, in this case application of the switching element or the circuitry 4 of a threshold switching characteristics minimises the heat dissipation in this element or circuitry while it is conducting current.
When the cause of the unbalance disappears and the PTC thermistor 3 cools down, the protection circuit 1 will reset.

## Claims

1. A protection circuit for potential transformers, connected into a circuit of open-delta arranged auxiliary windings of three single phase potential transformers, comprising a damping resistor (2) and a thermal protection element (3), **characterized in that** the damping resistor (2) and the thermal protection element (3) having a form of a PTC thermistor are connected into the circuit of the open-delta arranged auxiliary windings of the three single phase potential transformers by means of an electronic switching element or a circuitry (4) of a threshold switching characteristic so that exceeding the threshold voltage at the terminals of the open-delta arranged auxiliary windings of the three single phase potential transformers turns the electronic switching element or the circuitry (4) into its conductive state.

2. The protection circuit according to claim 1, **characterized in that** the electronic switching element (4) has a form of a diac (5).

3. The protection circuit according to claim 1, **characterized in that** the switching circuitry (4) comprises a triac (6) having a gate controlled by means of a diac (7).
